# EUROPEAN PATENT APPLICATION

(11) **EP 4 050 062 A1**
(43) Date of publication of application: **31.08.2022**
(21) Application number: 21159187.0
(22) Date of filing: 25.02.2021
(51) Int. Cl.: C08J 7/04

(54) **PLASTIC ARTICLE, METHOD FOR PREPARING THE SAME, AND PRODUCT COMPRISING THE SAME**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a plastic article, a method for preparing the same, and a product comprising the same. The plastic article comprises: i) a thermoplastic resin base layer having a first surface and a second surface opposite to each other, wherein at least one of the surfaces has a micro-nano texture structure so that when the base layer is viewed at an angle of 10 to 80 degrees, it exhibits a color ranging from purple to red in visible spectrum; ii) an inorganic material layer on the surface of the thermoplastic resin base layer having the micro-nano texture structure, with a thickness of 10 to 150 nm; and iii) a protective layer. The plastic article exhibits a dynamic dazzling effect and has good surface properties.

## Description

### TECHNICAL FIELD

The present invention belongs to the field of thermoplastic material processing. Specifically, the present invention relates to a plastic article, a method for preparing the same and a product comprising the same.

### BACKGROUND ART

As consumer electronic products such as mobile phones evolve rapidly, their housings and other structural components have made great progress, and they also encounter new challenges at the same time. In particular, the incoming 5G era increasingly demanding requirements on materials for the consumer electronic product housing. For example, when it comes to mobile phone back cover applications, it is particularly important to ensure signal transmission of mobile phone back covers with the development of 5G communication technology. Due to their strong signal shielding characteristics, traditional metals pose huge challenges to the design of antennas, and are no longer suitable for the manufacture of 5G mobile phone back covers. Plastics, however, enjoy such advantages as low cost, low dielectric constant, light weight, high degree of design freedom and simple molding process. Their applications in 5G mobile phone covers are receiving growing attention. Besides, the appearance of mobile phones is also one of the major considerations of consumers when purchasing mobile phones. Plastic mobile phone back covers, which feature good signal transmission and rich surface colors, are gaining attraction among people. Over the recent years, high-quality mobile phone housings with dazzling, gradient, metallic color and other appearance effects have become a fashion, grown in popularity in the market, and are the focus of mobile phone housing development.

CN209299308U discloses a dazzling housing comprising a housing. The housing comprises a base plate and a flange. At the connection position of the base plate and the flange is a groove with an upward opening, and the groove is in a U shape. The base plate is covered with an insulating layer, and there is a plurality of parallel light-guide fibers fixed between the insulating layer and the base plate. The light-guide fibers located on the upper portion of the base plate serve as sub-optical fibers, the light incident ends of which are all located on the groove wall.

Currently, mobile phone plastic housings are mainly produced by three processes, namely, in-mold label (IML), in-mold roller (IMR), and inner molding translate label (IMT).

There are many methods for imparting different colors to the plastic housing in the prior art. Conventional methods include adding toners or masterbatches of different colors to the material, or adding different dyes to the surface coating. These methods either require additional additives or increase production procedures, which ultimately lead to higher manufacturing costs of the product. Moreover, the color achieved by adding toners or dyes is generally static and cannot produce a dynamic dazzling effect. Furthermore, color spray coating or masterbatch injection molding can also improve the quality of the plastic housing. However, spray coating or masterbatch injection molding is only suitable for realizing the single-color plastic housing, and the multi-color housing is usually realized by printing.

The mobile phone housing tends to have a 3D curved surface structure, the corners of which can hardly be printed. As a result, the color is partially missing. To solve this problem, "in-mold decoration" is gradually employed in the art. That is, a color pattern is first printed on a planar flexible PET plastic film; then, the printed plastic film is cut and placed in a mold, followed by injection molding with a transparent plastic on the surface to realize a multi-color plastic housing. Since the flexible plastic film and the transparent plastic in this method have different thermal expansion coefficients, the composite housing would fracture due to failure to withstand the impact of high or low temperature in the temperature cycling test, and would also delaminate and fracture in subsequent use.

In addition, surface properties such as wear resistance are also important to the mobile phone housing.

Therefore, there is still a need in the art for a plastic housing with good dazzling effect and surface properties such as wear resistance.

### SUMMARY OF THE INVENTION

One objective of the present invention is to provide a plastic article with good dazzling effect and surface properties such as wear resistance.

Thus, according to a first aspect, the present invention provides a plastic article, comprising:
i) a thermoplastic resin base layer having a first surface and a second surface opposite to each other, wherein at least one of the surfaces has a micro-nano texture structure so that when the base layer is viewed at an angle of 10 to 80 degrees, it exhibits a color ranging from purple to red in visible spectrum;
ii) an inorganic material layer on the surface of the thermoplastic resin base layer having the micro-nano texture structure, with a thickness of 10 to 150 nm; and
iii) a protective layer,
wherein,
the inorganic material layer has a visible light transmittance of less than 30%;
the protective layer has a visible light transmittance of 10% or more;
the protective layer has a pencil hardness of above F, as determined according to GB/T 6739-2006;
when the base layer has a visible light transmittance of 10% or more, the protective layer is disposed on the first or second surface of the thermoplastic resin base layer;
when the base layer has a visible light transmittance of less than 10%, the protective layer is disposed on the inorganic material layer;
the visible light has a wavelength of 390 to 780 nm.

According to a second aspect, the present invention provides a method for preparing the plastic article according to the first aspect, comprising:
I) preparing the thermoplastic resin base layer;
II) applying the inorganic material layer onto the surface of the thermoplastic resin base layer having the micro-nano texture structure; and
III) applying the protective layer.

According to a third aspect, the present invention provides a product comprising the plastic article according to the first aspect.

The plastic article of the present invention achieves the dynamic dazzling effect through the micro-nano texture structure on the base layer. Moreover, the inorganic material layer can enhance the dynamic dazzling effect; the protective layer can ensure the plastic article to have good surface properties such as scratch resistance, wear resistance, chemical resistance and aging resistance. The preparation method of the present invention has such advantages as simple process steps, low manufacturing cost, and high product yield, and therefore is suitable for mass production.

### BRIEF DESCRIPTION OF THE DRAWINGS

The present invention will be described and explained in detail in conjunction with the drawings hereinafter.

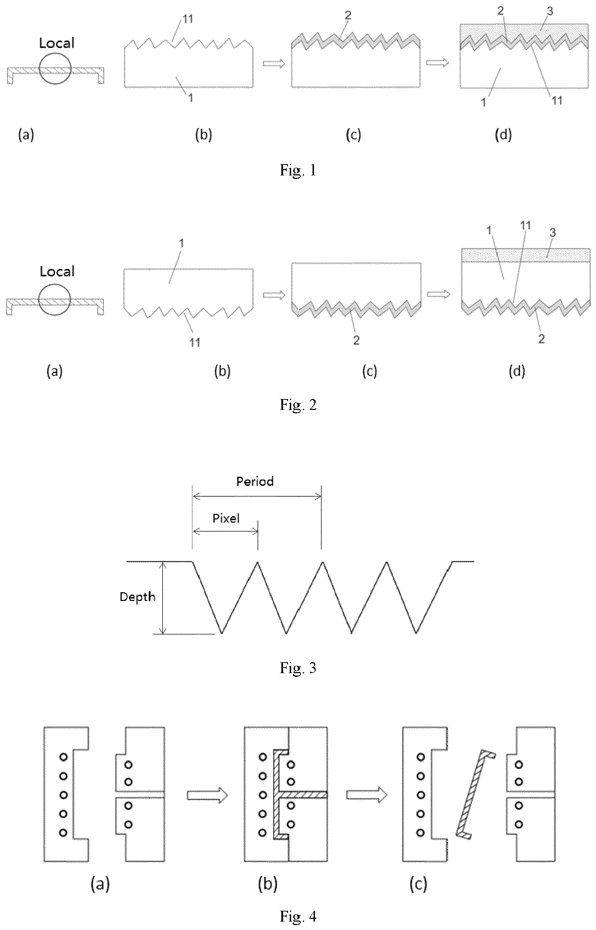

Fig. 1 shows a structural schematic diagram of the plastic article according to an embodiment of the present invention, in which Fig. 1(b) is a partial enlarged view of Fig. 1(a); 1 represents a base layer; 11 represents a micro-nano texture structure; 2 represents an inorganic material layer; 3 represents a protective layer.
Fig. 2 shows a structural schematic structural diagram of a plastic article according to an embodiment of the present invention, in which Fig. 2(b) is a partial enlarged view of Fig. 2(a); 1 represents a base layer; 11 represents a micro-nano texture structure; 2 represents an inorganic material layer; 3 represents a protective layer.
Fig. 3 shows a structural schematic diagram of a micro-nano texture structure according to an embodiment of the present invention.
Fig. 4 shows a flow schematic diagram of a traditional injection molding process, in which (a) represents mold clamping; (b) represents injection, pressure maintenance and cooling; (c) represents mold opening and ejection of the article.

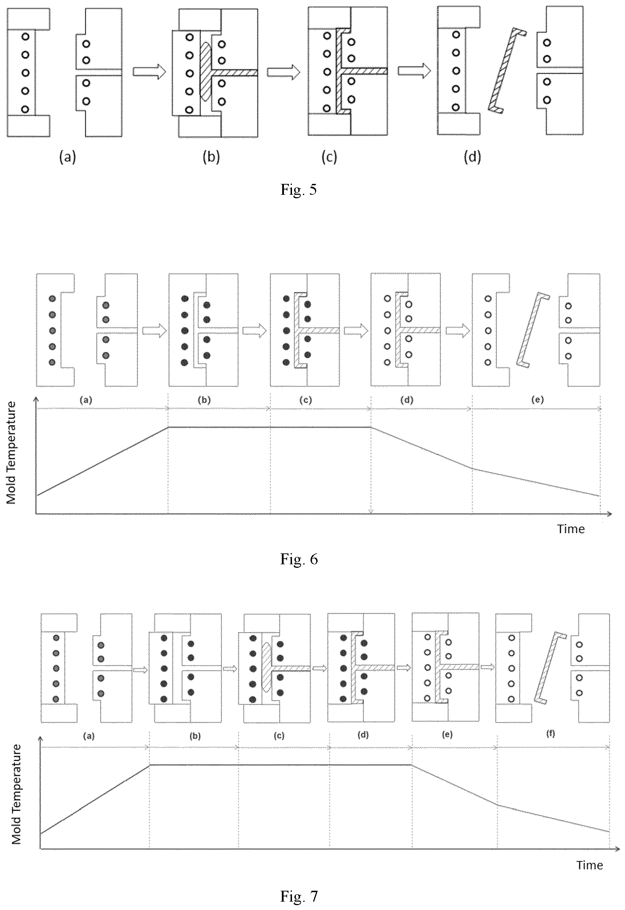

Fig. 5 shows a flow schematic diagram of an injection compression molding process, in which (a) represents mold semi-clamping; (b) represents injection; (c) represents compression and cooling; (d) represents mold opening and ejection of the article.
Fig. 6 shows a flow schematic diagram of a rapid heat cycle molding process, and a schematic diagram of the relationship between mold temperature and time, in which (a) represents mold heating; (b) represents mold clamping; (c) represents injection and pressure maintenance; (d) represents cooling; (f) represents mold opening and ejection of the article.
Fig. 7 shows a flow schematic diagram of a combination of the injection compression molding process and the rapid heat cycle molding process, and a schematic diagram of the relationship between mold temperature and time, in which (a) represents mold heating; (b) represents mold semi-clamping; (c) represents injection; (d) represents compression; (e) represents cooling; (f) represents mold opening and ejection of the article.

### DETAILED DESCRIPTION OF THE INVENTION

Some embodiments of the present invention will be described hereinafter for illustrative purposes and not for limitation.

The inventors surprisingly found that: applying a micro-nano inorganic material layer on the surface of the thermoplastic resin base layer having a replicated micro-nano texture structure can further enhance the dazzling effect, and further applying a protective layer on the inorganic material layer can improve surface protective properties of the product such as scratch resistance, aging resistance, chemical resistance, and durability of the dazzling effect.

The inventors also surprisingly found that: when a transparent thermoplastic resin is used to prepare the base layer, the protective layer can be applied onto the surface of the base layer not having the micro-nano texture structure.

According to a first aspect, the present invention provides a plastic article, comprising:
i) a thermoplastic resin base layer having a first surface and a second surface opposite to each other, wherein at least one of the surfaces has a micro-nano texture structure so that when the base layer is viewed at an angle of 10 to 80 degrees, it exhibits a color ranging from purple to red in visible spectrum;
ii) an inorganic material layer on the surface of the thermoplastic resin base layer having the micro-nano texture structure, with a thickness of 10 to 150 nm; and
iii) a protective layer,
wherein,
the inorganic material layer has a visible light transmittance of less than 30%;
the protective layer has a visible light transmittance of 10% or more;
the protective layer has a pencil hardness of above F, as determined according to GB/T 6739-2006;
when the base layer has a visible light transmittance of 10% or more, the protective layer is disposed on the first or second surface of the thermoplastic resin base layer;
when the base layer has a visible light transmittance of less than 10%, the protective layer is disposed on the inorganic material layer;
the visible light has a wavelength of 390 to 780 nm.

In the present application, the "dazzling effect" or "dynamic dazzling effect" refers to that the article exhibits a color ranging from purple to red in visible spectrum, when viewed at an angle of 10 to 80 degrees.

In the present application, the visible light refers to a light having a wavelength of 390 to 780 nm.

In the present application, the "visible light transmittance" can be measured in accordance with ISO 13468-2 (1999).

In the present application, when describing one layer being disposed on another layer, it does not exclude the circumstance where there may be other layers between them.

In some embodiments, both the first surface and the second surface of the base layer have a micro-nano texture structure.

In some embodiments, the present invention provides a plastic article, comprising:
i) a thermoplastic resin base layer having a first surface and a second surface opposite to each other, both of which have a micro-nano texture structure so that when the base layer is viewed at an angle of 10 to 80 degrees, it exhibits a color ranging from purple to red in visible spectrum;
ii) inorganic material layers on the first and second surfaces of the thermoplastic resin base layer, with a thickness of 10 to 150 nm; and
iii) a protective layer on the inorganic material layer of the first or second surface of the base layer,
wherein,
the inorganic material layer has a visible light transmittance of less than 30%;
the protective layer has a visible light transmittance of 10% or more;
the protective layer has a pencil hardness of above F, as determined according to GB/T 6739-2006.

In some embodiments, one of the first and second surfaces of the base layer has a micro-nano texture structure.

Referring to Fig. 1, in some embodiments, the present invention provides a plastic article, comprising:
i) a thermoplastic resin base layer 1 comprising a first surface and a second surface opposite to each other, wherein the first surface has a micro-nano texture structure 11 so that when the base layer is viewed at an angle of 10 to 80 degrees, it exhibits a color ranging from purple to red in visible spectrum;
ii) an inorganic material layer 2 on the first surface of the thermoplastic resin base layer 1, with a thickness of 10 to 150 nm; and
iii) a protective layer 3 on the inorganic material layer 2,
wherein,
the inorganic material layer has a visible light transmittance of less than 30%;
the protective layer has a visible light transmittance of 10% or more;
the protective layer has a pencil hardness of above F, as determined according to GB/T 6739-2006.

Referring to Fig. 2, in some embodiments, the present invention provides a plastic article, comprising:
i) a thermoplastic resin base layer 1 comprising a first surface and a second surface opposite to each other, wherein the second surface has a micro-nano texture structure 11 so that when the base layer is viewed at an angle of 10 to 80 degrees, it exhibits a color ranging from purple to red in visible spectrum;
ii) an inorganic material layer 2 on the second surface of the thermoplastic resin base layer 1, with a thickness of 10 to 150 nm; and
iii) a protective layer 3 on the first surface of the base layer,
wherein,
the base layer has a visible light transmittance of 10% or more;
the inorganic material layer has a visible light transmittance of less than 30%;
the protective layer has a visible light transmittance of 10% or more;
the protective layer has a pencil hardness of above F, as determined according to GB/T 6739-2006.

Preferably, the thermoplastic resin is selected from the group consisting of polycarbonate, a polycarbonate/acrylonitrile-butadiene-styrene copolymer (PC/ABS) blend, a polycarbonate/acrylonitrile-styrene-acrylate copolymer (PC/ASA) blend, a polycarbonate/polyethylene terephthalate (PC/PET) blend, a polycarbonate/polybutylene terephthalate (PC/PBT) blend, polymethylmethacrylate (PMMA), and a polycarbonate/polymethylmethacrylate (PC/PMMA) copolymer, and the like.

Examples of the commercially available polycarbonate include products sold under the trade names Makrolon^{®}MD4006 and Makrolon^{®}AL2647 by Covestro Polymers (China) Co., Ltd.

The thickness of the base layer is not particularly defined, and can be selected according to final use of the plastic article.

With respect to the plastic article as a mobile phone housing, preferably, the thickness of the base layer ranges from 0.8 to 1.5 mm.

The texture structure can be any suitable structure capable of exhibiting the dazzling effect, for example, it can take the shape of a wave, a sawtooth or a square wave.

Fig. 3 shows a schematic diagram of a sawtooth-shaped micro-nano texture structure according to an embodiment of the present invention.

In the waveform diagram, the height difference between adjacent peak and valley is a depth (d); the distance between two adjacent peaks (or valleys) is a pixel (p); and the distance between three adjacent peaks (or valleys) is a period (P).

Referring to Fig. 3, in some embodiments, the texture structure is sawtooth-shaped with a depth of 70 to 350 nm, preferably 300 to 350 nm, a pixel of 25 to 32 µm, and a period of 50 to 64 µm.

Referring to Fig. 3, in some embodiments, the texture structure is sawtooth-shaped with a depth of 60 to 125 nm, preferably 100 to 125 nm, a pixel of 830 to 1000 nm, and a period of 1660 to 2000 nm.

Light diffraction occurs when the dimension of the texture structure on the surface of the thermoplastic resin base layer is in a suitable range and the white light is irradiated on the surface with the texture structure. Light of different wavelengths can be observed at different viewing angles so that different colors can be observed from the surface. Moreover, such colors can change dynamically with the change of viewing angle, thus presenting a dynamic dazzling effect.

Preferably, the inorganic material is selected from the group consisting of aluminum (Al), chromium (Cr), silver (Ag), indium (In), molybdenum (Mo), and tungsten (W), and the like. The inventors found that the inorganic material layer with a thickness of 10 to 150 nm prepared using the inorganic material selected from the group consisting of aluminum (Al), chromium (Cr), silver (Ag), indium (In), molybdenum (Mo) and tungsten (W) had a visible light transmittance of less than 30%.

Preferably, the inorganic material layer has a thickness of 20 to 100 nm.

Optionally, there is an adhesive layer between the base layer and the inorganic material layer to enhance adhesion therebetween, said adhesive layer having a visible light transmittance of 10% or more.

Preferably, the adhesive layer is formed of, for example, a silicon dioxide material.

Preferably, the protective layer is formed of organic silicon coating, waterborne polyurethane coating, acrylic coating, or a combination of the foregoing coatings.

Examples of the commercially available organic silicon coating include products sold under the trade name SHC300 by Momentive Performance Materials Inc.

Examples of the commercially available water-based polyurethane coating include products sold under the trade name RGFN-045R by Ningbo Funa New Materials Technology Co. Ltd. Examples of the commercially available acrylic coating include products sold under the trade name FNUV-0 110 by Ningbo Funa New Materials Technology Co. Ltd.

Preferably, the protective layer has a thickness of 5 to 10 µm.

The protective layer can protect the texture structure on the surface of the base layer. The inorganic material layer can effectively partition the base layer and the protective layer, and ensure optical diffraction and dynamic dazzling effect. In addition, the protective layer can realize scratch resistance, wear resistance, chemical resistance and aging resistance.

The plastic article of the present invention can be, for example, a mobile phone housing.

According to a second aspect, the present invention provides a method for preparing the plastic article according to the first aspect, comprising:
I) preparing the thermoplastic resin base layer;
II) applying the inorganic material layer onto the surface of the thermoplastic resin base layer having the micro-nano texture structure; and
III) applying the protective layer.

The thermoplastic resin base layer can be prepared by using a mold with a micro-nano texture structure through the conventional thermoplastic resin molding process in the art (for example, a traditional injection molding process, a rapid heat cycle molding process, an injection compression molding process, or a combination of the rapid heat cycle molding process and the injection compression molding process).

The texture structure is the same as the one mentioned before on the base layer.

Referring to Fig. 4, the traditional injection molding process generally comprises: (a) mold clamping, (b) injection, pressure maintenance and cooling, and (c) mold opening and ejection of the article.

Referring to Fig. 5, the injection compression molding process generally comprises: (a) mold semi-clamping, (b) injection, (c) compression and cooling, and (d) mold opening and ejection of the article. In the injection compression molding process, prior to or during injection, the mold cavity will be open for certain distance, therefore the mold cavity increases in thickness, it would be easier for the resin melt to flow, the flow length will increase, and the pressure during the injection process will decrease. Before the resin melt fills the cavity in its entirety, the mold will be subjected to a compression action to completely close the mold cavity. During the compression, the melt will also fill the whole mold cavity as the mold cavity is compressed. This compression action enables the resin melt to be compressed in the direction perpendicular to the mold cavity surface during the flow, which is conducive to the even replication of the surface micro-nano structure on the surface of the whole product.

Referring to Fig. 6, the rapid heat cycle molding process is a variotherm injection molding process, comprising (a) mold heating, (b) mold clamping, (c) injection and pressure maintenance, (d) cooling, and (f) mold opening and ejection of the article. Specifically, the mold is heated by a rapid cooling and heating device before injection molding, so that the mold temperature is quickly increased to a relatively high temperature (for example, above the glass transition temperature of the amorphous material), and after the injection molding, the mold temperature is quickly decreased to below the temperature for ejection of the article. During the injection process, as the mold temperature is relatively high, the resin melt meeting area will have a relatively high fusion quality, which can effectively improve the weld line. The high mold temperature can also improve the flowability of the resin melt. Where the surface has a micro-nano structure, it can be ensured that the resin melt can flow into the micro-nano structure of the surface to well replicate the surface micro-nano structure.

Referring to Fig. 7, the combination of the injection molding compression process and the rapid heat cycle molding process comprises (a) mold heating, (b) mold semi-clamping, (c) injection, (d) compression, (e) cooling, and (f) mold opening and ejection of the article. The injection compression molding process can realize injection molding of thin-walled articles (for example, articles with a thickness of not greater than 2 mm) and even replication of mold surface, produce thin-walled parts with a micro-nano texture structure (for example, mobile phone back covers), as well as achieve both thin-walled and surface dynamic dazzling effects at the same time. Its combination with the rapid heat cycle molding process can improve the flowability of the resin melt, and can realize deep replication of the mold surface micro-nano texture. The inventors found that as for the surface micro-nano texture structure that achieves the dynamic dazzling effect, the rapid heat cycle molding process can significantly improve the surface replication effect.

Preferably, the thermoplastic resin base layer is prepared by a combination of the injection compression molding process and the rapid heat cycle molding process .

A person skilled in the art can adjust the process parameters according to the selected thermoplastic resin material and the molding process.

The inorganic material layer can be applied by an application process known in the art (for example, a physical vapor deposition (PVD) process).

Optionally, before the application of the inorganic material layer, an adhesive layer is applied onto the base layer to enhance adhesion between the inorganic material layer and the base layer.

The protective layer can be applied by an application process known in the art (for example, spray coating, curtain coating, roller coating, brush coating, etc.).

According to a third aspect, the present invention provides a product comprising the plastic article according to the first aspect.

The product may be, for example, an electronic and electrical device housing, decoration part (for example, automotive interior and exterior decoration part), and an article's outer package.

The description of each feature in the present application may be combined if there is no contradiction, and the combination falls within the scope as claimed in the present application.

The terms "comprising" and "including" in the present application cover the circumstances which further comprise or include other elements not specifically mentioned and the circumstances consisting of the elements mentioned.

Unless otherwise defined, all technical and scientific terms used herein have the same meaning as commonly understood by a person skilled in the field the present invention belongs to. When the definition of a term in the present description conflicts with the meaning as commonly understood by a person skilled in the field the present invention belongs to, the definition described herein shall prevail.

Unless otherwise specified, all numerical values expressing the dimension and process parameters and the like used in the specification and claims are to be understood as being modified by the term "about". Therefore, unless indicated to the contrary, the numerical values and parameters described herein are approximate values which may be changed according to the desired performance.

The invention in particular refers to the following aspects:
1. A plastic article, comprising:
   i) a thermoplastic resin base layer having a first surface and a second surface opposite to each other, wherein at least one of the surfaces has a micro-nano texture structure so that when the base layer is viewed at an angle of 10 to 80 degrees, it exhibits a color ranging from purple to red in visible spectrum;
   ii) an inorganic material layer on the surface of the thermoplastic resin base layer having the micro-nano texture structure, with a thickness of 10 to 150 nm; and
   iii) a protective layer,
   wherein,
   the inorganic material layer has a visible light transmittance of less than 30%;
   the protective layer has a visible light transmittance of 10% or more;
   the protective layer has a pencil hardness of above F, as determined according to GB/T 6739-2006;
   when the base layer has a visible light transmittance of 10% or more, the protective layer is disposed on the first or second surface of the thermoplastic resin base layer;
   when the base layer has a visible light transmittance of less than 10%, the protective layer is disposed on the inorganic material layer;
   the visible light has a wavelength of 390 to 780 nm and is determined in accordance with ISO 13468-2 (1999).
2. The plastic article of aspect 1, comprising:
   i) a thermoplastic resin base layer having a first surface and a second surface opposite to each other, both of which have a micro-nano texture structure so that when the base layer is viewed at an angle of 10 to 80 degrees, it exhibits a color ranging from purple to red in visible spectrum;
   ii) inorganic material layers on the first and second surfaces of the thermoplastic resin base layer, with a thickness of 10 to 150 nm; and
   iii) a protective layer on the inorganic material layer which is on the first or second surface of the base layer,
   wherein,
   the inorganic material layer has a visible light transmittance of less than 30%;
   the protective layer has a visible light transmittance of 10% or more;
   the protective layer has a pencil hardness of above F, as determined according to GB/T 6739-2006.
3. The plastic article of aspect 1, comprising:
   i) a thermoplastic resin base layer having a first surface and a second surface opposite to each other, wherein the first surface has a micro-nano texture structure so that when the base layer is viewed at an angle of 10 to 80 degrees, it exhibits a color ranging from purple to red in visible spectrum;
   ii) an inorganic material layer on the first surface of the thermoplastic resin base layer, with a thickness of 10 to 150 nm; and
   iii) a protective layer on the inorganic material layer,
   wherein,
   the inorganic material layer has a visible light transmittance of less than 30%;
   the protective layer has a visible light transmittance of 10% or more;
   the protective layer has a pencil hardness of above F, as determined according to GB/T 6739-2006.
4. The plastic article of aspect 1, comprising:
   i) a thermoplastic resin base layer having a first surface and a second surface opposite to each other, wherein the second surface has a micro-nano texture structure so that when the base layer is viewed at an angle of 10 to 80 degrees, it exhibits a color ranging from purple to red in visible spectrum;
   ii) an inorganic material layer on the second surface of the thermoplastic resin base layer, with a thickness of 10 to 150 nm; and
   iii) a protective layer on the first surface of the base layer,
   wherein,
   the base layer has a visible light transmittance of 10% or more;
   the inorganic material layer has a visible light transmittance of less than 30%;
   the protective layer has a visible light transmittance of 10% or more;
   the protective layer has a pencil hardness of above F, as determined according to GB/T 6739-2006.
5. The plastic article of any one of aspects 1 to 4, wherein the thermoplastic resin is selected from the group consisting of polycarbonate, a polycarbonate/acrylonitrile-butadiene-styrene copolymer (PC/ABS) blend, a polycarbonate/acrylonitrile-styrene-acrylate copolymer (PC/ASA) blend, a polycarbonate/polyethylene terephthalate (PC/PET) blend, a polycarbonate/polybutylene terephthalate (PC/PBT) blend, polymethylmethacrylate (PMMA), and a polycarbonate/polymethylmethacrylate (PC/PMMA) copolymer.
6. The plastic article of any one of aspects 1 to 5, wherein the texture structure takes the shape of a wave, a sawtooth or a square wave.
7. The plastic article of any one of aspects 1 to 5, wherein the texture structure is sawtooth-shaped with a depth of 70 to 350 nm, preferably 300 to 350 nm, a pixel of 25 to 32 µm, and a period of 50 to 64 µm.
8. The plastic article of any one of aspects 1 to 5, wherein the texture structure is sawtooth-shaped with a depth of 60 to 125 nm, preferably 100 to 125 nm, a pixel of 830 to 1000 nm, and a period of 1660 to 2000 nm.
9. The plastic article of any one of aspects 1 to 8, wherein the inorganic material is selected from the group consisting of chromium (Cr), aluminum (Al), silver (Ag), indium (In), molybdenum (Mo) and tungsten (W).
10. The plastic article of any one of aspects 1 to 9, wherein there is an adhesive layer between the base layer and the inorganic material layer, said adhesive layer having a visible light transmittance of 10% or more.
11. The plastic article of any one of aspects 1 to 10, wherein the protective layer is formed of organic silicon coating, water-based polyurethane coating, acrylic coating, or a combination of the foregoing coatings.
12. The plastic article of any one of aspects 1 to 11, wherein the protective layer has a thickness of 5 to 10 µm.
13. A method for preparing the plastic article of any one of aspects 1 to 12, comprising:
   I) preparing the thermoplastic resin base layer;
   II) applying the inorganic material layer onto the surface of the thermoplastic resin base layer having the micro-nano texture structure; and
   III) applying the protective layer.
14. The method of aspect 13, wherein the base layer is applied with an adhesive layer prior to the application of the inorganic material layer, .
15. A product comprising the plastic article of any one of aspects 1 to 12.

### Examples

The concept, the specific structure and the resulting technical effects of the present invention will be further illustrated below in conjunction with the Examples so that a person skilled in the art can fully understand the objectives, features and effects of the present invention. The skilled person in the art will understand that the Examples herein are for illustrative purposes only and the scope of the present invention is not limited thereto.

### Equipment used

Injection molding machine: ENGEL DUO 3550/650 injection molding machine from the company ENGEL, with a nominal clamping force of 650 tons, and a screw diameter of 70 mm.

Mold temperature controller: SINGLE ATT H2-200-48 high-pressure hot water temperature controller from the company SINGLE.

Injection mold: Two-cavity injection mold for mobile phone back covers, wherein the mold core surface has a sawtooth-shaped micro-nano texture structure (with an average depth of about 370 nm, a pixel of about 25-32 µm, and a period of about 50-64 µm). The micro-nano texture structure on the mold core surface is provided by GF Machining Solutions. The mold has both injection and compression functions, and supports for rapid cooling and heating functions.

Physical vapor deposition (PVD) machine: Leybold UNIVEX 250 RF vacuum coating machine from the company Leybold.

### Raw materials used

Resin materials: black low-temperature impact-resistant polycarbonate resin pellets under the trade name Makrolon^{®}MD4006 (with the color number of 901510), and transparent polycarbonate resin pellets under the trade name Makrolon^{®}AL2647 (with the color number of 550115 and a visible light transmittance of 89% at the thickness of 2 mm or less), both from Covestro Polymers (China) Co., Ltd.

Materials for inorganic material layer: chromium, aluminum, silver and silicon dioxide, all from Suzhou Nimitz Vacuum Equipment Co., Ltd.

Silicon-system thermally curable coating: SHC300 from Momentive Performance Materials Inc.

### Tests

In the Examples of the present application, the resulting article is tested as follows.

Texture depth, pixel and period were tested on the VK-X1000/X1100 shape measurement laser microscopic system from the company KEYENCE in the following manner.

First, a sample with the micro-nano structure side up was placed on the microscope stage. The stage was moved and adjusted to find the area suitable for measurement. Appropriate objective lens (with total magnification of 3000x) was selected and auto-focused to shoot a plurality of optical images from bottom to top in the height direction to construct a stereoscopic image with height information. Next, a cross-section was arbitrarily taken from the captured stereoscopic image, and measured in terms of depth (d), pixel (p) and period (P) by measurement tools.

Surface wear resistance was evaluated by the steel wool test. Specifically, a sample was fixed horizontally on a universal friction test bench. The 0000# steel wool was fixed on a square planar friction head with an area of 1 cm², and it came in full contact with the test sample, and rubbed back and forth under a load of 500 g, with one round trip counted as one time. The test suspended every 50 times to observe the sample surface until visible scratch could be seen thereon. If no scratch appeared, the test would terminate after up to 500 times.

Coating adhesion was obtained by the cross-cut test in accordance with ISO-2409 (2020).

Coating hardness was obtained by the pencil hardness test in accordance with GB/T 6739-2006.

### Comparative Example 1 (CE1)

### Raw material drying

Makrolon^{®} MD4006 black resin pellets were dried at 120°C for at least 4 hours so that the moisture content was less than 0.02% by weight.

### Preparation of a base layer

A base layer was prepared using the dried resin pellets through a combination of the injection compression molding (ICM) process and the rapid heat cycle molding (RHCM) process. The specific preparation process comprised the steps of:
A) raising the temperature of the injection mold to 170°C and closing the mold, leaving a gap of 1 mm between the parting surfaces;
B) injecting the molten resin into the mold cavity;
C) further closing the mold till the parting surfaces completely fit;
D) decreasing the mold temperature to 120°C and maintaining this for 60 seconds; and
E) opening the mold and taking out the molded base layer.

The molding process parameters used were listed in Table 1.

It was observed that the resulting base layer had a dazzling effect on one surface.

The surface properties of the resulting base layer were tested, and the test results were listed in Table 1.

### Comparative Example 2 (CE2)

### Preparation of a base layer

A base layer was prepared in accordance with Comparative Example 1 (CE1). It was observed that the resulting base layer had a dazzling effect on one surface.

### Application of a protective layer

The silicon-system thermally curable coating SHC300 was spray coated onto the surface of the resulting base layer having the dazzling effect (also referred to as the upper surface, the same below) to obtain a protective layer with a thickness of about 10 µm, thereby a plastic article was obtained. The spray coating process included: spray coating SHC300 uniformly onto the surface of the base layer through a gun tip with a diameter of 1.5 mm for 5 seconds, and then placing the base layer with the protective layer in an oven at 127°C and baking for 40 minutes till the protective layer was completely cured.

The surface dazzling effect of the resulting plastic article was observed, and the observation results were listed in Table 1.

The surface properties of the resulting plastic article were tested, and the test results were listed in Table 1.

### Comparative Example 3 (CE3)

### Preparation of a base layer

A base layer was prepared in accordance with Comparative Example 1 (CE1). It was observed that the resulting base layer had a dazzling effect on one surface.

### Application of an inorganic material layer

A transparent (with a visible light transmittance of 99%) silicon dioxide layer (SiO₂) with a thickness of 20 nm was applied onto the surface of the base layer having the dazzling effect through a physical vapor deposition (PVD) process to obtain a plastic article. The application process included: placing the base layer removed of dust with an ion air gun into the cavity of the PVD machine; clamping the base layer with sample holders so that the surface to be coated faced toward the cathode target surface and rotated; closing the cavity door and vacuuming till an ultra-high vacuum state was achieved; after a glow was observed, depositing the silicon dioxide target atoms at a certain rate onto the surface to be coated using a magnetron sputtering deposition method (power: 100W, Ar flow: 40sccm); automatically closing the cathode baffle plates after 300 seconds; and stopping the deposition of the film layer.

The surface dazzling effect of the resulting plastic article was observed, and the observation results were listed in Table 1.

The surface properties of the resulting plastic article were tested, and the test results were listed in Table 1.

### Comparative Example 4 (CE4)

### Preparation of a base layer

A base layer was prepared in accordance with Comparative Example 1 (CE1). It was observed that the resulting base layer had a dazzling effect on one surface.

### Application of an inorganic material layer

A silicon dioxide layer (SiO₂) with a thickness of 20 nm was applied onto the surface of the base layer having the dazzling effect in accordance with Comparative Example 3 (CE3).

### Application of a protective layer

Through the spray coating process described in Comparative Example 2 (CE2), the silicon-system thermally curable coating SHC300 was spray coated onto the silicon dioxide (SiO₂) layer to obtain a protective layer with a thickness of about 10 µm, thereby a plastic article was obtained.

The surface dazzling effects of the base layer after the application of the silicon dioxide (SiO₂) layer and the resulting plastic article were observed respectively, and the observation results were listed in Table 1.

The surface properties of the resulting plastic article were tested, and the test results were listed in Table 1.

### Inventive Example 1 (IE1)

### Raw material drying

Makrolon^{®} MD4006 black resin pellets were dried at 120°C for at least 4 hours so that the moisture content was less than 0.02% by weight.

### Preparation of a base layer

A base layer was prepared using the dried resin pellets through the traditional injection molding (TIM) process. The specific preparation process comprised the steps of:
A) raising the temperature of the injection mold to 100°C and closing the mold, leaving a gap of 0 mm between the parting surfaces;
B) injecting the molten resin into the mold cavity;
C) applying a pressure of 800 to 1000 bar to the cavity and maintaining this for 3 seconds;
D) stop applying the pressure to the cavity and maintaining this for 15 seconds; and
E) opening the mold and taking out the molded base layer.

The molding process parameters used were listed in Table 1.

It was observed that the resulting base layer had a dazzling effect on one surface.

### Application of an inorganic material layer

An aluminum (Al) layer with a thickness of 20 nm was applied onto the surface of the base layer having the dazzling effect through a physical vapor deposition (PVD) process. The application process of the aluminum (Al) layer included: placing the base layer removed of dust with an ion air gun into the cavity of the PVD machine; clamping the base layer with sample holders so that the surface to be coated faced toward the cathode target surface and rotated; closing the cavity door and vacuuming till an ultra-high vacuum state was achieved; after a glow was observed, depositing the target aluminum metal atoms at a certain rate onto the surface to be coated using a magnetron sputtering deposition method (power: 100W, Ar flow: 40sccm); automatically closing the cathode baffle plates after 300 seconds; and stopping the deposition of the film layer.

### Application of a protective layer

Through the spray coating process described in Comparative Example 2 (CE2), the silicon-system thermally curable coating SHC300 was spray coated onto the metal aluminum (Al) layer to obtain a protective layer with a thickness of about 10 µm, thereby a plastic article was obtained.

The surface dazzling effects of the base layer after the application of the aluminum (Al) layer and the resulting plastic article were observed respectively, and the observation results were listed in Table 1.

The surface properties of the resulting plastic article were tested, and the test results were listed in Table 1.

### Inventive Example 2 (IE2)

### Raw material drying

Makrolon^{®} MD4006 resin pellets were dried at 120°C for at least 4 hours so that the moisture content was less than 0.02% by weight.

### Preparation of a base layer

A base layer was prepared using the dried resin pellets through an injection compression molding (ICM) process. The specific preparation process comprised the steps of:
A) raising the temperature of the injection mold to 100°C and closing the mold, leaving a gap of 1 mm between the parting surfaces;
B) injecting the molten resin into the mold cavity;
C) further closing the mold till the parting surfaces completely fit;
D) maintaining this for 15 seconds to wait for the product to cool down;
E) opening the mold and taking out the molded base layer.

The molding process parameters used were listed in Table 1.

It was observed that the resulting base layer had a dazzling effect on one surface.

### Application of an inorganic material layer

A metal aluminum (Al) layer with a thickness of 20 nm was applied onto the surface of the base layer having the dazzling effect through the physical vapor deposition (PVD) process described in Inventive Example 1 (IE1).

### Application of a protective layer

Through the spray coating process described in Comparative Example 2 (CE2), the silicon-system thermally curable coating SHC300 was spray coated onto the metal aluminum (Al) layer to obtain a protective layer with a thickness of about 10 µm, thereby a plastic article was obtained.

The surface dazzling effects of the base layer after the application of the aluminum (Al) layer and the resulting plastic article were observed respectively, and the observation results were listed in Table 1.

The surface properties of the resulting plastic article were tested, and the test results were listed in Table 1.

### Inventive Example 3 (IE3)

### Raw material drying

Makrolon^{®} MD4006 resin pellets were dried at 120°C for at least 4 hours so that the moisture content was less than 0.02% by weight.

### Molding of a base layer

A base layer was prepared using the dried resin pellets through the rapid heat cycle molding process. The specific preparation process comprised the steps of:
A) raising the temperature of the injection mold to 170°C and closing the mold, leaving a gap of 0 mm between the parting surfaces;
B) injecting the molten resin into the mold cavity;
C) applying a pressure of 800 to 1000 bar to the cavity and maintaining this for 3 seconds;
D) decreasing the mold temperature to 120°C and maintaining this for 60 seconds to wait for the product to cool down; and
E) opening the mold and taking out the molded base layer.

The molding process parameters used were listed in Table 1.

It was observed that the resulting base layer had a dazzling effect on one surface.

### Application of an inorganic material layer

A metal aluminum (Al) layer with a thickness of about 20 nm was applied onto the surface of the base layer having the dazzling effect through the physical vapor deposition (PVD) process described in Inventive Example 1 (IE1).

### Application of a protective layer

Through the spray coating process described in Comparative Example 2 (CE2), the silicon-system thermally curable coating SHC300 was spray coated onto the metal aluminum (Al) layer to obtain a protective layer with a thickness of about 10 µm, thereby a plastic article was obtained.

The surface dazzling effects of the base layer after the application of the aluminum (Al) layer and the resulting plastic article were observed respectively, and the observation results were listed in Table 1.

The surface properties of the resulting plastic article were tested, and the test results were listed in Table 1.

### Inventive Example 4 (IE4)

### Preparation of a base layer

A base layer was prepared in accordance with Comparative Example 1 (CE1). It was observed that the resulting base layer had a dazzling effect on one surface.

### Application of an inorganic material layer

A metal aluminum (Al) layer with a thickness of about 20 nm was applied onto the surface of the base layer having the dazzling effect through the physical vapor deposition (PVD) process described in Inventive Example 1 (IE1).

### Application of a protective layer

Through the spray coating process described in Comparative Example 2 (CE2), the silicon-system thermally curable coating SHC300 was spray coated onto the metal aluminum (Al) layer to obtain a protective layer with a thickness of about 10 µm, thereby a plastic article was obtained.

The surface dazzling effects of the base layer after the application of the aluminum (Al) layer and the resulting plastic article were observed respectively, and the observation results were listed in Table 1.

The surface properties of the resulting plastic article were tested, and the test results were listed in Table 1.

### Inventive Example 5 (IE5)

### Preparation of a base layer

A base layer was prepared in accordance with Comparative Example 1 (CE1). It was observed that the resulting base layer had a dazzling effect on one surface.

### Application of an adhesive layer

A silicon dioxide (SiO₂) layer with a thickness of 20 nm was applied onto the surface of the base layer having the dazzling effect through a physical vapor deposition (PVD) process. The application process of the silicon dioxide (SiO₂) layer was identical to that in Comparative Example 3 (CE3).

### Application of an inorganic material layer

A metal aluminum (Al) layer with a thickness of about 20 nm was applied onto the surface of the base layer having the dazzling effect through the physical vapor deposition (PVD) process described in Inventive Example 1 (IE1).

### Application of a protective layer

Through the spray coating process described in Comparative Example 2 (CE2), the silicon-system thermally curable coating SHC300 was spray coated onto the metal aluminum (Al) layer to obtain a protective layer with a thickness of about 10 µm, thereby a plastic article was obtained.

The surface dazzling effects on the base layer after the application of the aluminum (Al) layer and the resulting plastic article were observed respectively, and the observation results were listed in Table 1.

The surface properties of the resulting plastic article were tested, and the test results were listed in Table 1.

### Inventive Example 6 (IE6)

### Raw material drying

Makrolon^{®}AL2647 transparent resin pellets were dried at 120°C for at least 4 hours so that the moisture content was less than 0.02% by weight.

### Preparation of a base layer

A base layer was prepared using the dried resin pellets through a combination of the injection compression molding process and the rapid heat cycle molding process. The specific preparation process was similar to that in Comparative Example 1, and they only differed in the process parameters as illustrated in Table 1.

It was observed that the resulting base layer had a dazzling effect on one surface.

### Application of an inorganic material layer

A metal aluminum (Al) layer with a thickness of about 20 nm was applied onto the surface of the base layer having the dazzling effect through the physical vapor deposition (PVD) process described in Inventive Example 1 (IE1).

### Application of a protective layer

Through the spray coating process described in Comparative Example 2 (CE2), the silicon-system thermally curable coating SHC300 was spray coated onto the surface (also called as lower surface) of the base layer opposite to the surface having the dazzling effect to obtain a protective layer with a thickness of about 10 µm, thereby a plastic article was obtained..

The surface dazzling effects of the base layer after the application of the aluminum (Al) layer and the resulting plastic article were observed respectively, and the observation results were listed in Table 1.

The surface properties of the resulting plastic article were tested, and the test results were listed in Table 1.

**Table 1**

| | | **CE1** | **CE2** | **CE3** | **CE4** | **IE1** | **IE2** | **IE3** | **IE4** | **IE5** | **IE6** |
|---|---|---|---|---|---|---|---|---|---|---|---|
| Resin used | | Makrolon^{®} MD4006 | | | | | | | | | Makrolon^{®} AL2647 |
| Molding process | | ICM+RHCM | | | | TI M | IC M | RHC M | ICM+RHCM | | |
| Molding process parameters | Melt temperature (°C) | 280 | 280 | 280 | 280 | 310 | 280 | 280 | 280 | 280 | 280 |
| | Mold temperature (°C) | 170 | 170 | 170 | 170 | 100 | 100 | 170 | 170 | 170 | 130 |
| | Injection molding time (s) | 1 | 1 | 1 | 1 | 0.3 | 1.1 | 0.4 | 1 | 1 | 1.1 |
| | Gap between the parting surfaces (mm) | 1 | 1 | 1 | 1 | 0 | 1 | 0 | 1 | 1 | 2.5 |
| | Maximum clamping force (ton) | 300 | 300 | 300 | 300 | 300 | 300 | 300 | 300 | 300 | 300 |
| | Maximum injection molding pressure (bar) | 126 | 126 | 126 | 126 | 155 | 137 | 183 | 126 | 126 | 117 |
| Base layer | Thickness (mm) | 1.5 | 1.5 | 1.5 | 1.5 | 1.5 | 1.5 | 1.5 | 1.5 | 1.5 | 1.5 |
| | Texture depth (nm) | / | / | / | / | 244 | 171 | 333 | 336 | / | / |
| | Surface dazzling effect* | +++ | +++ | +++ | +++ | ++ | ++ | +++ | +++ | +++ | ++ |
| Adhesive layer | Surface to be coated with the adhesive layer | / | | | | | | | | Upper surface of the base layer | / |
| | Adhesive layer material | / | | | | | | | | SiO₂ | / |
| | Thickness (nm) | / | | | | | | | | 20 | / |
| Inorganic material layer | Surface to be coated with the inorganic material layer | / | / | Upper surface of the base layer | | | | | | On the adhesive layer | Upper surface of the base layer |
| | Inorganic material | / | / | SiO₂ | SiO 2 | Al | Al | Al | Al | Al | Al |
| | Thickness(nm) | / | / | 20 | 20 | 20 | 20 | 20 | 20 | 20 | 20 |
| Surface dazzling effect after application of the inorganic material layer* | | / | / | +++ | +++ | +++ | +++ | ++++ | ++++ | ++++ | +++ |
| Protective layer | Surface to be applied with the protective layer | / | Upper surface of the base layer | / | On the inorganic material layer | | | | | | Lower surface of the base layer |
| | Protective layer material | / | SHC300 | / | SHC300 | | | | | SHC300 | SHC300 |
| | Thickness(µm) | / | 10 | / | 10 | 10 | | | | 10 | 10 |
| Surface dazzling effect after application of the protective layer* | | / | - | / | - | +++ | +++ | ++++ | ++++ | ++++ | +++ |
| Surface properties | Cross-cut test (grade) | / | / | 5 | / | 0 | | | | | |
| | Pencil hardness test | <2B | / | <2B | / | H | | | | | |
| | Steel wool test for wear resistance | <100 times with scratch appearance | / | <100 times with scratch appearance | / | 500 times without visible scratch | | | | | |

| | | | | | | | | | | | |
|---|---|---|---|---|---|---|---|---|---|---|---|
| *Dazzling effect: - invisible; + dimly visible; ++ visible; +++ clearly visible, ++++ best visible. | | | | | | | | | | | |

It is found after measurement that in all Examples, no matter which process for molding the base layer is adopted, the pixel and period of the resulting micro-nano texture structure are the same as those of the mold.

In Inventive Example 1 (IE1) which prepared the base layer using the traditional injection molding process, the thin-walled product was required to be formed under high melt temperature, high speed and high pressure. As the injection molding was performed under high melt temperature and high pressure, the surface texture depth of the base layer was well replicated, and the surface dazzling effect of the base layer was visible.

In Inventive Example 2 (IE2) which prepared the base layer using the injection compression molding process, the thin-walled product was formed under medium melt temperature, medium mold temperature and medium speed, and the pressure required for molding and the internal stress of the product could be reduced. The surface texture depth of the base layer was well replicated, and the surface dazzling effect of the base layer was visible.

In Inventive Example 3 (IE3) which prepared the base layer using a combination of the injection compression molding process and the rapid heat cycle molding process, the product was prepared by raising the mold temperature and improving the flowability of the material to a certain extent, under high speed and high pressure. Moreover, the high mold temperature was conducive to improving the degree of surface texture replication. The surface texture depth of the injection molded article was well replicated, and the surface dazzling effect of the base layer was clearly visible.

In Comparative Examples 1-4 (CE1-4) and Inventive Examples 4-6 (IE4-6) which prepared the base layer using a combination of the injection compression molding process and the rapid heat cycle molding process, it would be helpful to form a thin-walled product under a medium speed and a relatively low injection molding pressure, by further raising the mold temperature and further improving the flowability of the material on the basis of the injection compression molding process. The high mold temperature was also conducive to improving the degree of texture replication. The surface texture depth of the base layer was well replicated, and the surface dazzling effect was clearly visible.

Additionally, it was also found in Comparative Example 2 (CE2) that the surface dazzling effect of the base layer became invisible after a protective layer was directly spray coated onto the surface of the base layer having the dazzling effect.

In Comparative Example 3 (CE3), the surface dazzling effect of the base layer was maintained after the application of a silicon dioxide layer (SiO₂) with a thickness of 20 nm onto the surface of the base layer having the dazzling effect by a physical vapor deposition (PVD). However, the resulting plastic article had low surface hardness and was susceptible to surface scratch.

In Inventive Examples 1-5 (IE1-5), the surface dazzling effect of the base layer was enhanced after the application of an aluminum layer with a thickness of 20 nm onto the surface of the base layer having the dazzling effect by a physical vapor deposition (PVD). In Inventive Examples 1-2 (IE1-2), the surface dazzling effect of the base layer was enhanced from visible to clearly visible. In Inventive Example 3-5 (IE3-5), the surface dazzling effect of the base layer was enhanced from clearly visible to best visible.

In Inventive Examples 1-4 (IE1-4), a silicon-system thermally curable coating was spray coated onto the aluminum (Al) layer to improve the scratch and wear resistance of the surface. Meanwhile, the surface dazzling effect of the base layer applied with an aluminum (Al) layer was enhanced. In Inventive Example 1-2 (IE1-2), the surface dazzling effect was clearly visible. In Inventive Example 3-4 (IE3-4), the surface dazzling effect was best visible.

In Inventive Example 5 (IE5), a silicon dioxide layer (SiO₂) was applied onto the base layer to serve as an adhesive layer, and an aluminum (Al) layer was applied onto the adhesive layer, and a silicon-system thermally curable coating was applied onto the aluminum (Al) layer to improve the scratch and wear resistance of the surface. The surface dazzling effect of the base layer was maintained and best visible.

In Inventive Example 6 (IE6), the dazzling effect was enhanced from visible to clearly visible after an aluminum layer was applied onto the surface of the base layer having the micro-nano texture structure (also referred to as the upper surface). The surface of the base layer opposite to the surface having the micro-nano texture structure (also referred to as the lower surface) was directly spray coated with a silicon-system thermally curable coating to improve the scratch and wear resistance of the surface. As the base layer was transparent (with a visible light transmittance of 89%) and the texture structure was replicated on the lower surface, the dazzling effect was clearly visible when the article was viewed from the upper surface.

### Inventive Examples 7-8 (IE7-8)

Inventive Examples 7-8 were carried out with reference to Inventive Example 4. Their difference lies in the mold temperature, see Table 2. The texture depth of the base layer was measured and compared with that of the base layer obtained in Inventive Examples 2 and 4, and the results were listed in Table 2.

**Table 2**

| | IE2 | IE7 | IE8 | IE4 |
|---|---|---|---|---|
| Molding process | ICM | ICM+RHCM | ICM+RHCM | ICM+RHCM |
| Mold temperature (°C) | 100 | 130 | 150 | 170 |
| Texture depth (nm) | 171 | 259 | 349 | 336 |
| Surface dazzling effect of the base layer * | ++ | ++ | +++ | +++ |

| | | | | |
|---|---|---|---|---|
| *Dazzling effect: -invisible; + dimly visible; ++ visible; +++ clearly visible; ++++best visible. | | | | |

It can be seen from Table 2 the influence of the mold temperature on the texture depth of the molded article when the injection compression molding process or a combination of the injection compression molding process and the rapid heat cycle molding process is used. As the mold temperature increases, the texture depth increases, and the surface dazzling effect of the base layer also becomes more obvious. When the mold temperature is approximate to the glass transition temperature of the resin material (about 150°C), the texture depth is the greatest, and the surface dazzling effect of the base layer is the best visible. However, when the mold temperature is further increased (170°C), the texture depth and the surface dazzling effect will not be further improved.

### Inventive Examples 9-10 (IE9-10)

Inventive Examples 9-10 were carried out with reference to Inventive Example 4. Their difference lies in the material for the inorganic material layer, see Table 3. The visibility of the surface dazzling effect after the application of the inorganic material layer was observed and compared with that of the article obtained in Inventive Example 4, and the results were listed in Table 3.

**Table 3**

| | IE4 | IE9 | IE10 |
|---|---|---|---|
| Inorganic material | Al | Cr | Ag |
| Thickness of the inorganic material layer (nm) | 20 | 20 | 20 |
| Surface dazzling effect after the application of the inorganic material layer | ++++ | ++++ | ++++ |

| | | | |
|---|---|---|---|
| *Dazzling effect: -invisible; + dimly visible; ++ visible; +++ clearly visible; ++++best visible. | | | |

It can be seen from Table 3 that the application of an inorganic material layer with nano-thickness can enhance the visibility of the dazzling effect.

### Inventive Examples 11-13 (IE11-13) and Comparative Example 5 (CE5)

Inventive Examples 11-13 and Comparative Example 5 were carried out with reference to Inventive Example 4. Their difference lies in the thickness of the inorganic material layer, see Table 4. The visibility of the surface dazzling effect after the application of the inorganic material layer was observed and compared with that of the article obtained in Inventive Example 4, and the results were listed in Table 4.

**Table 4**

| | IE4 | IE11 | IE12 | IE13 | CE5 |
|---|---|---|---|---|---|
| Thickness of the aluminum layer (nm) | 20 | 50 | 100 | 150 | 200 |
| Surface dazzling effect after the application of the aluminum layer * | ++++ | ++++ | +++ | ++ | + |

| | | | | | |
|---|---|---|---|---|---|
| *Dazzling effect: -invisible; + dimly visible; ++ visible; +++ clearly visible; ++++best visible. | | | | | |

It can be seen from Table 4 that when the thickness of the aluminum layer is between 20 nm and 50 nm, the surface dazzling effect of the article is the best. When the thickness of the aluminum layer is about 100 nm, the surface dazzling effect is still clearly visible. When the thickness of the aluminum layer is 150 nm, the surface dazzling effect is still visible. When the thickness of the aluminum layer reaches 200 nm, the surface dazzling effect becomes dimly visible.

The foregoing content only describes exemplary embodiments or Examples of the present invention, and is not intended to limit the present invention. For a person skilled in the art, the present invention can be modified and changed in various ways. Any modification, equivalent replacement, improvement, etc. made within the spirit and principle of the present invention all fall within the scope of the claims of the present application.

## Claims

1. A plastic article, comprising:
i) a thermoplastic resin base layer having a first surface and a second surface opposite to each other, wherein at least one of the surfaces has a micro-nano texture structure so that when the base layer is viewed at an angle of 10 to 80 degrees, it exhibits a color ranging from purple to red in visible spectrum;
ii) an inorganic material layer on the surface of the thermoplastic resin base layer having the micro-nano texture structure, with a thickness of 10 to 150 nm; and
iii) a protective layer,
wherein,
the inorganic material layer has a visible light transmittance of less than 30%;
the protective layer has a visible light transmittance of 10% or more;
the protective layer has a pencil hardness of above F, as determined according to GB/T 6739-2006;
when the base layer has a visible light transmittance of 10% or more, the protective layer is disposed on the first or second surface of the thermoplastic resin base layer;
when the base layer has a visible light transmittance of less than 10%, the protective layer is disposed on the inorganic material layer;
the visible light has a wavelength of 390 to 780 nm and is determined in accordance with ISO 13468-2 (1999).

2. The plastic article of claim 1, comprising:
i) a thermoplastic resin base layer having a first surface and a second surface opposite to each other, both of which have a micro-nano texture structure so that when the base layer is viewed at an angle of 10 to 80 degrees, it exhibits a color ranging from purple to red in visible spectrum;
ii) inorganic material layers on the first and second surfaces of the thermoplastic resin base layer, with a thickness of 10 to 150 nm; and
iii) a protective layer on the inorganic material layer which is on the first or second surface of the base layer,
wherein,
the inorganic material layer has a visible light transmittance of less than 30%;
the protective layer has a visible light transmittance of 10% or more;
the protective layer has a pencil hardness of above F, as determined according to GB/T 6739-2006.

3. The plastic article of claim 1, comprising:
i) a thermoplastic resin base layer having a first surface and a second surface opposite to each other, wherein the first surface has a micro-nano texture structure so that when the base layer is viewed at an angle of 10 to 80 degrees, it exhibits a color ranging from purple to red in visible spectrum;
ii) an inorganic material layer on the first surface of the thermoplastic resin base layer, with a thickness of 10 to 150 nm; and
iii) a protective layer on the inorganic material layer,
wherein,
the inorganic material layer has a visible light transmittance of less than 30%;
the protective layer has a visible light transmittance of 10% or more;
the protective layer has a pencil hardness of above F, as determined according to GB/T 6739-2006.

4. The plastic article of claim 1, comprising:
i) a thermoplastic resin base layer having a first surface and a second surface opposite to each other, wherein the second surface has a micro-nano texture structure so that when the base layer is viewed at an angle of 10 to 80 degrees, it exhibits a color ranging from purple to red in visible spectrum;
ii) an inorganic material layer on the second surface of the thermoplastic resin base layer, with a thickness of 10 to 150 nm; and
iii) a protective layer on the first surface of the base layer,
wherein,
the base layer has a visible light transmittance of 10% or more;
the inorganic material layer has a visible light transmittance of less than 30%;
the protective layer has a visible light transmittance of 10% or more;
the protective layer has a pencil hardness of above F, as determined according to GB/T 6739-2006.

5. The plastic article of any one of claims 1 to 4, wherein the thermoplastic resin is selected from the group consisting of polycarbonate, a polycarbonate/acrylonitrile-butadiene-styrene copolymer (PC/ABS) blend, a polycarbonate/acrylonitrile-styrene-acrylate copolymer (PC/ASA) blend, a polycarbonate/polyethylene terephthalate (PC/PET) blend, a polycarbonate/polybutylene terephthalate (PC/PBT) blend, polymethylmethacrylate (PMMA), and a polycarbonate/polymethylmethacrylate (PC/PMMA) copolymer.

6. The plastic article of any one of claims 1 to 5, wherein the texture structure takes the shape of a wave, a sawtooth or a square wave.

7. The plastic article of any one of claims 1 to 5, wherein the texture structure is sawtooth-shaped with a depth of 70 to 350 nm, preferably 300 to 350 nm, a pixel of 25 to 32 µm, and a period of 50 to 64 µm.

8. The plastic article of any one of claims 1 to 5, wherein the texture structure is sawtooth-shaped with a depth of 60 to 125 nm, preferably 100 to 125 nm, a pixel of 830 to 1000 nm, and a period of 1660 to 2000 nm.

9. The plastic article of any one of claims 1 to 8, wherein the inorganic material is selected from the group consisting of chromium (Cr), aluminum (Al), silver (Ag), indium (In), molybdenum (Mo) and tungsten (W).

10. The plastic article of any one of claims 1 to 9, wherein there is an adhesive layer between the base layer and the inorganic material layer, said adhesive layer having a visible light transmittance of 10% or more.

11. The plastic article of any one of claims 1 to 10, wherein the protective layer is formed of organic silicon coating, water-based polyurethane coating, acrylic coating, or a combination of the foregoing coatings.

12. The plastic article of any one of claims 1 to 11, wherein the protective layer has a thickness of 5 to 10 µm.

13. A method for preparing the plastic article of any one of claims 1 to 12, comprising:
I) preparing the thermoplastic resin base layer;
II) applying the inorganic material layer onto the surface of the thermoplastic resin base layer having the micro-nano texture structure; and
III) applying the protective layer.

14. The method of claim 13, wherein the base layer is applied with an adhesive layer prior to the application of the inorganic material layer, .

15. A product comprising the plastic article of any one of claims 1 to 12.
